# EUROPÄISCHE PATENTSCHRIFT

(11) **EP 2 916 026 B1**
(45) Veröffentlichungstag und Bekanntmachung des Hinweises auf die Patenterteilung: **02.10.2019**
(21) Anmeldenummer: 15150873.6
(22) Anmeldetag: 13.01.2015
(51) Int. Cl.: F16D 21/06

(54) **Doppelkupplungsanordnung**
Double clutch system
Système d'embrayage double

(30) Priorität: 04.03.2014 DE 102014102842
(43) Veröffentlichungstag der Anmeldung: 09.09.2015
(73) Patentinhaber: Magna PT B.V. & Co. KG, 74199 Untergruppenbach (DE)
(72) Erfinder: Cokdogru, Inan, 74924 Neckarsbischofsheim (DE); Gremplini, Hansi, 74379 Ingersheim (DE); Rühle, Günter, 74369 Löchgau (DE)
(74) Vertreter: Rausch, Gabriele

(56) Entgegenhaltungen:
- WO-A2-2011/019532
- DE-A1-102009 050 998
- DE-A1-102010 021 036
- DE-B3-102008 048 801
- US-A- 2 505 450
- US-A1- 2013 199 883

## Beschreibung

Die vorliegende Erfindung betrifft eine Doppelkupplungsanordnung für einen Kraftfahrzeugantriebsstrang, mit einem Gehäuse, mit einer ersten und einer zweiten Reibkupplung, die in dem Gehäuse in einer axialen Richtung versetzt angeordnet sind und eine Kupplungseinrichtung mit einer ersten axialen Seite und einer zweiten axialen Seite bilden, und mit einem ersten Aktuator zur Betätigung der ersten Reibkupplung und einem zweiten Aktuator zur Betätigung der zweiten Reibkupplung.

Doppelkupplungsgetriebe in Kraftfahrzeugantriebssträngen haben sich in den letzten Jahren als kosteneffiziente und komfortable Alternative zu Wandler-Automatikgetrieben durchgesetzt. Die Doppelkupplungsgetriebe weisen zwei Teilgetriebe auf, von denen eines den geraden Gangstufen und das andere den ungeraden Gangstufen zugeordnet ist. Jedem der Teilgetriebe ist getriebeeingangsseitig eine Reibkupplung zugeordnet, die gemeinsam eine Doppelkupplungsanordnung bilden. Die Reibkupplungen können überschneidend betätigt werden, so dass ausgehend von einem Quellgang in einem der Teilgetriebe und einem vorgewählten Zielgang in dem anderen Teilgetriebe Gangwechsel ohne Zugkraftunterbrechung durchgeführt werden können.

Solche Doppelkupplungsanordnungen können trockene Reibkupplungen aufweisen, wie es beispielsweise aus dem Dokument DE 10 2009 006 422 B4 bekannt geworden ist. Bei der dort beschriebenen Doppelkupplungsanordnung ist eine gehäusefeste Nabe vorgesehen, an deren Außenumfang zwei trockene Reibkupplungen in axialer Richtung versetzt angeordnet sind. Die zwei Reibkupplungen weisen Ausgangsglieder auf, die mit jeweiligen GetriebeEingangswellen verbunden sind. Zwischen den Ausgangsgliedern ist eine Zentralplatte angeordnet, die über ein Plattenradiallager an der gehäusefesten Nabe drehbar gelagert ist. Radial innerhalb der Reibkupplung sind gehäusefeste Aktuatoren an dem Außenumfang der Nabe festgelegt, die über Axiallager auf jeweilige Eingangsglieder der Reibkupplungen wirken. Diese Doppelkupplungsanordnung baut axial kurz, weist jedoch einen vergleichsweise großen Außendurchmesser auf. Aufgrund der Tatsache, dass sich die Reibkupplungen eine gemeinsame Zentralplatte teilen, kann ein Übersprechen ("cross-talk") bei der Betätigung der Reibkupplungen nicht ausgeschlossen werden. Unter einem Übersprechen wird vorliegend verstanden, dass eine Betätigung der einen Reibkupplung eine gewisse Wirkung auf die Betätigung der anderen Reibkupplung ausübt, die Betätigungen der Reibkupplungen also in einer Art Wechselwirkung stehen. Ferner ist es bei dieser Reibkupplung aufgrund des großen Außendurchmessers schwierig, die Reibkupplung in einen Antriebsstrang mit tiefem Schwerpunkt zu integrieren, wie er beispielsweise für Sportwagen erforderlich ist.

Bei den bekannten Doppelkupplungsanordnungen ist es auch bekannt, nasslaufende Reibkupplungen in Form von Lamellenkupplungen zu verwenden. Beispiele hierfür sind aus dem Dokument DE 10 2006 010 113 A1 bekannt.

Dabei ist in einer Variante vorgesehen, dass die zwei Reibkupplungen radial ineinander verschachtelt sind, wobei die Aktuatorik für die zwei Reibkupplungen, ähnlich wie bei dem oben beschriebenen Dokument DE 10 2009 006 422 B4, radial innerhalb der zwei Reibkupplungen angeordnet ist. Das Dokument DE 10 2006 010 113 A1 offenbart jedoch auch eine Anordnung, bei der die zwei Reibkupplungen in axialer Richtung versetzt angeordnet sind. Die Reibkupplungen teilen sich hierbei einen Innenlamellenträger, an dem ein Zentralglied vorgesehen ist, an dem sich beide Reibkupplungen bei ihrer Betätigung abstützen. Die Außenlamellenträger sind jeweils mit Eingangswellen eines Doppelkupplungsgetriebes verbunden. Die Aktuatorik für die Reibkupplungen ist wiederum an einer gehäusefesten Nabe vorgesehen, und zwar radial innerhalb des Innenlamellenträgers.

Eine weitere Doppelkupplungsanordnung mit axial versetzt angeordneten Reibkupplungen und einem gemeinsamen Zentralglied und radial innen angeordneten Hydraulikzylindern ist aus dem Dokument DE 10 2008 048 801 B3 bekannt.

Aus dem Dokument DE 10 2009 050 998 A1ist eine Doppelkupplung für ein automatisches oder automatisiertes Doppelkupplungsgetriebe bekannt, mit zwei Reibkupplungen, mit zwei Betätigungskolben, mit einem Außenlamellenträger und mit zwei Innenlamellenträgern, wobei die beiden Reibkupplungen zum einen über den Außenlamellenträger mit einer Motorwelle und zum anderen über jeweils einen der Innenlamellenträger jeweils eine Getriebeeingangswelle verbindbar oder verbunden sind.

Aus der US 2013 0199 883 A1 ist eine Doppelkupplung bekannt, die ein Abstützelement aufweist, das aus dem äußeren Lamellenträger gebildet ist.

Aus der WO 2011 019532 A2 ist eine parallele Doppelkupplung bekannt, die mit einer Unterteilung voneinander getrennt ist.

Vor diesem Hintergrund ist es eine Aufgabe der Erfindung, eine verbesserte Doppelkupplungsanordnung anzugeben, die insbesondere ein Übersprechen verhindern kann und/oder radial kompakt baut. Ferner ist es bevorzugt, wenn die Doppelkupplungsanordnung kostgengünstig zu fertigen ist.

Die obige Aufgabe wird gemäß einem ersten Aspekt der Erfindung bei der eingangs genannten Doppelkupplungsanordnung dadurch gelöst, dass in axialer Richtung zwischen der ersten und der zweiten Reibkupplung eine Axialabstützungseinrichtung angeordnet ist, wobei die Axialabstützungseinrichtung ein erstes Abstützungsglied für die erste Reibkupplung und ein zweites Abstützungsglied für die zweite Reibkupplung aufweist.

Durch die Maßnahme, für jede der zwei axial versetzten Reibkupplungen ein eigenes Abstützungsglied vorzusehen, kann ein Übersprechen bei Betätigung der zwei Reibkupplungen verhindert oder zumindest deutlich reduziert werden.

Die Reibkupplungen der Doppelkupplungsanordnung sind insbesondere nasslaufende Reibkupplungen, die ein Verbindungsglied aufweisen, an dem jeweilige Lamellenträger der zwei Reibkupplungen ausgebildet sind.

Die zwei Reibkupplungen sind daher vorzugsweise auf der gleichen radialen Höhe angeordnet.

Das erste und das zweite Abstützungsglied sind in axialer Richtung voneinander beabstandet. Die zwei Abstützungsglieder sind an dem oben genannten Verbindungsglied festgelegt.

Die Aufgabe wird somit vollkommen gelöst.

Gemäß der erfindungsgemäßen Ausführungsform sind das erste und das zweite Abstützungsglied jeweils als Stützring ausgebildet, wobei die Stützringe vorzugsweise an einem gemeinsamen Außenlamellenträger-Verbindungsglied axial festgelegt sind.

Die Stützringe sind folglich radial innerhalb des gemeinsamen Außenlamellenträger-Verbindungsgliedes angeordnet. Das gemeinsame Außenlamellenträger-Verbindungsglied ist vorzugsweise mit einem gemeinsamen Eingangsglied der Doppelkupplungsanordnung verbunden, das beispielsweise mit einem Antriebsmotor bzw. einer Antriebseinheit verbindbar ist.

Die Doppelkupplungsanordnung ist erfindungsgemäß im Wesentlichen symmetrisch in Bezug auf eine Radialebene ausgebildet, wobei die Stützringe und Lamellen der zwei Reibkupplungen als Gleichteile ausgebildet werden können.

Gemäß einer weiteren bevorzugten Ausführungsform, sind der erste und der zweite Aktuator jeweils als Hydraulikzylinder ausgebildet, wobei eine Fluidzufuhr zu den Hydraulikzylindern so ausgebildet ist, dass Fluid zu dem ersten Hydraulikzylinder auf der ersten axialen Seite der Kupplungseinrichtung zugeführt wird und Fluid zu dem zweiten Hydraulikzylinder auf der entgegengesetzten zweiten axialen Seite der Kupplungseinrichtung zugeführt wird.

Durch diese Maßnahme kann erreicht werden, dass die Fluidzufuhr zu den Hydraulikzylindern in radialer Richtung kompakter ausgebildet werden kann.

Dabei ist es generell denkbar, den zwei Reibkupplungen jeweils eine gehäusefeste Nabe zuzuordnen, an deren Außenumfang ein jeweiliger Hydraulikzylinder zum Betätigen der jeweiligen Reibkupplung festgelegt ist, der über Axiallager auf die Reibkupplungen wirkt.

Von besonderem Vorzug ist es jedoch, wenn der erste Hydraulikzylinder über eine erste Drehdurchführung mit Fluid versorgt wird, wobei der zweite Hydraulikzylinder über eine zweite Drehdurchführung mit Fluid versorgt wird, und wobei die erste und die zweite Drehdurchführung auf axial gegenüberliegenden Seiten der Kupplungseinrichtung angeordnet sind.

Durch diese Maßnahme ist es möglich, die Hydraulikzylinder an jeweiligen Drehgliedern der Drehdurchführungen festzulegen, so dass sich die Hydraulikzylinder im Betrieb mit dem Eingangsglied der Doppelkupplungsanordnung mitdrehen. Daher sind zur Betätigung der Reibkupplungen vorzugsweise keine Axiallager vorgesehen. Die Hydraulikzylinder können dabei neben Zylinderräumen auch Fluidausgleichsräume aufweisen, um ein unbeabsichtigtes Betätigen der Reibkupplungen bei höheren Drehzahlen zu verhindern. Das Konzept der Bereitstellung von Fluidausgleichsräumen ist allgemein bekannt.

Gemäß einer weiteren bevorzugten Ausführungsform weisen die erste Drehdurchführung und/oder die zweite Drehdurchführung ein in Bezug auf das Gehäuse feststehendes Festglied und ein in Bezug auf das Gehäuse drehbar gelagertes Drehglied auf, wobei das Drehglied radial innerhalb des Festgliedes angeordnet ist.

Mit anderen Worten wird Fluid von einer Fluidversorgung zu wenigstens einem der Hydraulikzylinder von einem radial außenliegenden Festglied, wie einem Gehäuseabschnitt, über die Drehdurchführung hin zu einem radial inneren Drehglied, wie einem Wellenabschnitt, geleitet.

Auch diese Maßnahme kann zu einer radial kompakten Bauweise beitragen.

Generell können die erste und die zweite Reibkupplung als trockene Reibkupplungen ausgebildet sein.

Besonders bevorzugt ist es jedoch, wenn die erste und die zweite Reibkupplung jeweils als nasslaufende Lamellenkupplungen ausgebildet sind, wobei Kühlfluid für die erste und die zweite Reibkupplung auf axial gegenüberliegenden Seiten der Kupplungseinrichtung zugeführt wird.

Die Zuführung von Kühlfluid kann dabei entweder über gehäusefeste Naben erfolgen. Vorzugsweise erfolgt die Zufuhr von Kühlfluid jedoch über Drehdurchführungen, über die auch Betätigungsfluid für die Hydraulikzylinder zugeführt wird.

Das Kühlfluid kann im Bereich von Drehgliedern der Drehdurchführungen gegebenenfalls zum Befüllen von Fliehkraftausgleichsräumen der Hydraulikzylinder verwendet werden.

Gemäß einer weiteren bevorzugten Ausführungsform, sind die erste und die zweite Reibkupplung jeweils als nasslaufende Lamellenkupplung mit einem jeweiligen Außenlamellenträger und einem jeweiligen Innenlamellenträger ausgebildet, wobei die erste und die zweite Reibkupplung ein gemeinsames Verbindungsglied aufweisen und wobei das Verbindungsglied mit den Außenlamellenträgern der ersten und der zweiten Reibkupplung verbunden ist.

Das Verbindungsglied kann sich dabei in axialer Richtung radial von der einen axialen Seite der Kupplungseinrichtung hin zu der anderen axialen Seite der Kupplungseinrichtung erstrecken. Das Verbindungsglied kann insbesondere mit einem Eingangsglied verbunden sein, beispielsweise mit einem Eingangswellenabschnitt, und zwar auf der einen axialen Seite der Kupplungseinrichtung. Auf der anderen axialen Seite kann das Verbindungsglied mit einer Nebenwelle verbunden sein, an der vorzugsweise einer der Hydraulikzylinder festgelegt ist. Die Nebenwelle kann ferner das Drehglied einer Drehdurchführung bilden und kann an dem Gehäuse drehbar gelagert sein. Betätigungsfluid für den Hydraulikzylinder auf dieser axialen Seite der Kupplungseinrichtung und/oder Kühlfluid für die Reibkupplung auf dieser axialen Seite können dabei von radial außen, beispielsweise von einem Gehäuseabschnitt, in radialer Richtung nach innen hin zu der Nebenwelle zugeführt werden.

Die Nebenwelle ist vorzugsweise als Hohlwelle ausgebildet, die die zwei Ausgangswellen der Doppelkupplungsanordnung (= Getriebeeingangswellen des Doppelkupplungsgetriebes) umgibt.

Ferner ist es insgesamt bevorzugt, wenn die erste und die zweite Reibkupplung jeweils als nasslaufende Lamellenkupplungen mit einem jeweiligen Außenlamellenträger und einem jeweiligen Innenlamellenträger ausgebildet sind, wobei die Innenlamellenträger jeweils mit einem Ausgangsglied der ersten bzw. der zweiten Reibkupplung verbunden sind.

Die Ausgangsglieder können als Verbindungselemente ausgebildet sein, die sich in radialer Richtung zwischen den jeweiligen Innenlamellenträgern und Außenumfängen der jeweiligen Ausgangswelle (= Getriebeeingangswelle) erstrecken und an ihrem Innenumfang über Passverzahnungen oder dergleichen mit den jeweiligen Wellen verbunden sind.

Gemäß einer weiteren bevorzugten Ausführungsform, sind der erste und der zweite Aktuator jeweils als Hydraulikzylinder ausgebildet, die jeweils einen Betätigungskolben zur Betätigung der ersten bzw. der zweiten Reibkupplung aufweisen, wobei der erste und/oder der zweite Betätigungskolben eine radiale Kolbenerstreckung aufweist, wobei die erste und/oder die zweite Reibkupplung eine radiale Kupplungserstreckung aufweist, und wobei sich die radiale Kolbenerstreckung und die radiale Kupplungserstreckung zu wenigstens 30 %, insbesondere wenigstens 50 % überschneiden.

Mit anderen Worten sind die Hydraulikzylinder nicht radial innerhalb der jeweiligen Reibkupplungen angeordnet, sondern sind außen an den axialen Seiten der Kupplungseinrichtung angeordnet und liegen vorzugsweise auf der gleichen oder einer ähnlichen radialen Höhe wie die Reibkupplungen.

Besonders bevorzugt ist es, wenn die Überschneidung zwischen der radialen Kolbenerstreckung und der radialen Kupplungserstreckung größer ist als 60 %.

Unter einer solchen prozentualen Überschneidung ist zu verstehen, dass in einer axialen Projektion bei einer beispielsweise fünfzigprozentigen Überschneidung wenigstens die Hälfte der radialen Kolbenerstreckung sich mit der radialen Kupplungserstreckung überschneidet und/oder umgekehrt.

Auch diese Maßnahme kann zu einer radial kompakten Bauweise beitragen.

Gemäß einer weiteren bevorzugten Ausführungsform weist das Gehäuse ein erstes Gehäuseteil und ein zweites Gehäuseteil auf, die über eine radiale Trennfuge miteinander verbunden sind, wobei Fluid für die erste Reibkupplung über das erste Gehäuseteil zugeführt wird und wobei Fluid für die zweite Reibkupplung über das zweite Gehäuseteil zugeführt wird.

Die erste Drehdurchführung kann insbesondere an einem radialen Innenabschnitt des ersten Gehäuseteils ausgebildet sein. Die zweite Drehdurchführung kann insbesondere an einem radialen Innenabschnitt des zweiten Gehäuseteils angeordnet sein.

Die Fluidzuführung über die Gehäuseteile kann durch Kanäle in den Gehäuseteilen erfolgen, beispielsweise durch Bohrungen, die sich axial oder radial erstrecken und gegebenenfalls zu ihrer Verbindung schneiden. Die Fluidzufuhr kann jedoch auch über separate Kanäle außen an dem Gehäuse erfolgen und erst im Bereich von Drehdurchführungen in die Gehäuseteile eintreten.

An einem der Gehäuseteile ist vorzugsweise eine hydraulische Stelleinheit festgelegt, die beispielsweise eine Fluidversorgungseinrichtung für die Hydraulikzylinder und/oder für Kühlungszwecke beinhaltet.

Insgesamt kann mit der vorliegenden Erfindung eine Doppelkupplungsanordnung geschaffen werden, die eine hohe Drehmomentkapazität und Drehzahlfestigkeit bei möglichst kleinem Außendurchmesser und geringem Massenträgheitsmoment realisiert. Durch den kleinen Außendurchmesser der Doppelkupplungsanordnung kann es möglich sein, den Abstand von einer Antriebswelle bis zu einer Unterkante des Getriebes zu reduzieren, vorzugsweise auf einen Wert < 150 mm, insbesondere < 120 mm, und sogar bis hin zu < 100 mm. Dies kann dazu führen, dass der komplette Antriebsstrang im Kraftfahrzeug weiter abgesenkt werden kann. Dies kann die Schwerpunktshöhe des kompletten Fahrzeugs verringern, so dass sich das fahrdynamische Verhalten verbessert. Die Doppelkupplung kann in paralleler bzw. spiegelbildlicher Bauweise ausgeführt sein, mit gegenüberliegender hydraulischer Aktuatorik, wobei vorzugsweise Gleichteile in Bezug auf Lamellenträger, Aktuatorik usw. realisierbar sind. Auch die Fluidzufuhr zu den Reibkupplungen kann im Wesentlichen spiegelbildlich ausgebildet sein, um auch hier durch Gleichteile zu kostengünstigen Lösungen zu gelangen.

Durch die Tatsache, dass vorzugsweise zwei unabhängige, auf axial gegenüberliegenden Seiten der Kupplungseinrichtung angeordnete, Drehdurchführungen vorgesehen sind, kann die Anzahl der Kanäle der Drehdurchführungen jeweils reduziert werden. Dies kann auch zu einer kompakten Bauweise beitragen.

In manchen Bauweisen kann auch ein Verbrauchsvorteil durch ein geringeres Schleppmoment realisiert werden, insbesondere, wenn die Anzahl der Kolbenringe in der Drehdurchführung minimal gehalten wird. Dadurch kann das Schleppmoment des Getriebes und der Kupplungseinrichtung reduziert werden.

Die Stützringe können geprägte Stützringe sein. Ferner ist es auch denkbar, für Kühlfluid und Betätigungsfluid getrennte Drehdurchführungen vorzusehen, und zwar vorzugsweise auf jeder axialen Seite der Kupplungseinrichtung.

In manchen Ausführungsformen ist ferner vorgesehen, dass Zylinderräume der Hydraulikzylinder auf den axial gegenüberliegenden Seiten der Reibkupplungen sich in radialer Richtung mit den Reibkupplungen überschneiden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigt:

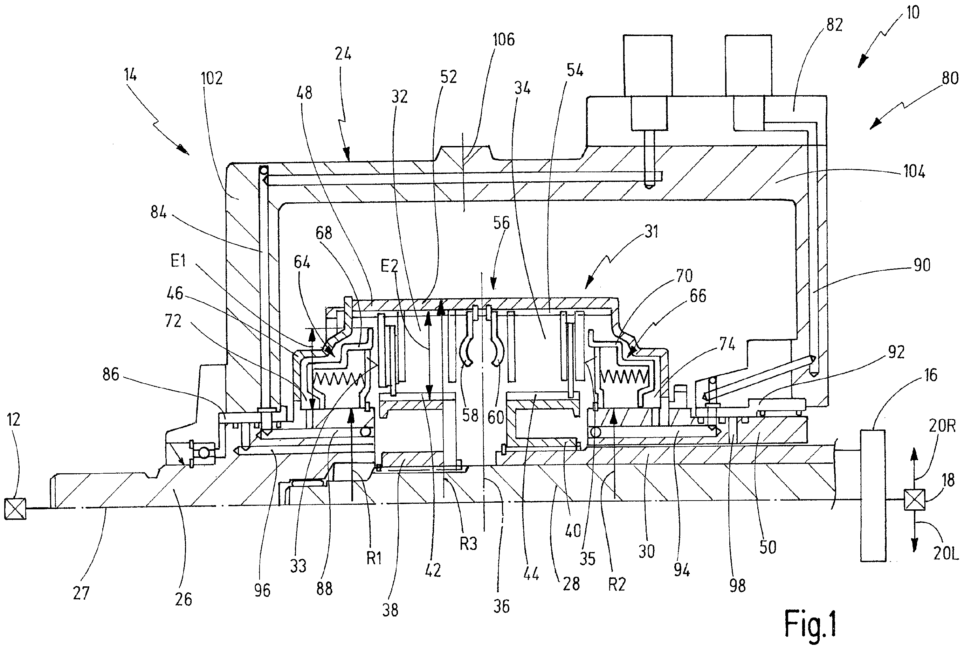

Fig. 1: eine schematische Längsschnittansicht durch einen Antriebsstrang für ein Kraftfahrzeug mit einer Ausführungsform einer erfindungsgemäßen Doppelkupplungsanordnung.

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor oder eine Hybrid-Antriebseinheit sowie eine Doppelkupplungsanordnung 14. Eingangsseitig ist die Doppelkupplungsanordnung 14 mit dem Antriebsmotor 12 verbunden. Ausgangsseitig ist die Doppelkupplungsanordnung 14 mit einem Stufengetriebe 16 in Form eines Doppelkupplungsgetriebes mit zwei Teilgetrieben verbunden. Der Ausgang des Stufengetriebes 16 ist mit einem Differential 18 verbunden, mittels dessen Antriebsleistung auf angetriebene Räder 20L, 20R des Kraftfahrzeuges verteilbar ist.

Die Doppelkupplungsanordnung 14 beinhaltet ein Gehäuse 24, das Teil des Getriebegehäuses darstellen kann. Ferner weist die Doppelkupplungsanordnung 14 auf einer axialen Seite eine Eingangswelle 26 auf, die entlang einer Längsachse 27 ausgerichtet ist und mit dem Antriebsmotor 12 verbindbar ist.

Die Doppelkupplungsanordnung 14 beinhaltet ferner eine erste Ausgangswelle 28, die als Innenwelle ausgebildet ist und mit einem ersten Teilgetriebe des Stufengetriebes 16 verbindbar ist, sowie eine zweite Ausgangswelle 30. Die zweite Ausgangswelle 30 ist als Hohlwelle um die erste Ausgangswelle 28 herum angeordnet und ist mit einem zweiten Teilgetriebe des Stufengetriebes 16 verbindbar.

Die Ausgangswellen 28, 30 erstrecken sich auf der dem Antriebsmotor 12 entgegengesetzten axialen Seite aus der Doppelkupplungsanordnung 14 heraus.

Die Doppelkupplungsanordnung 14 beinhaltet ferner eine Kupplungseinrichtung 31, die eine erste Reibkupplung 32 und eine axial versetzt hierzu angeordnete zweite Reibkupplung 34 beinhaltet. Eine der zweiten Reibkupplung 34 abgewandte axiale Seite der ersten Reibkupplung 32 bildet eine erste axiale Seite der Kupplungseinrichtung 31. Eine der ersten Reibkupplung 32 abgewandte axiale Seite der zweiten Reibkupplung 34 bildet eine zweite axiale Seite 35 der Kupplungseinrichtung 31.

Die zwei Reibkupplungen 32, 34 sind vorzugsweise spiegelsymmetrisch in Bezug auf eine radiale Symmetrieebene angeordnet, die in Fig. 1 mit 36 schematisch dargestellt ist.

Die erste Reibkupplung 32 ist über ein sich radial erstreckendes erstes Verbindungselement 38 mit der ersten Ausgangswelle 28 verbunden. Die zweite Reibkupplung 34 ist über ein sich radial erstreckendes zweites Verbindungselement 40 mit der zweiten Ausgangswelle 30 verbunden. An dem ersten Verbindungselement 38 ist außenumfänglich ein Innenlamellenträger 42 für die erste Reibkupplung 32 ausgebildet. An einem Außenumfang des zweiten Verbindungselementes 40 ist ein Innenlamellenträger 44 für die zweite Reibkupplung 34 ausgebildet.

Auf der ersten axialen Seite der Kupplungseinrichtung 31 ist die Eingangswelle 26 mit einem Eingangskorb 46 drehfest verbunden. Der Eingangskorb 46 ist mit einem sich axial erstreckenden Verbindungsglied 48 verbunden, das im Wesentlichen als Hohlzylinder ausgebildet sein kann und die zwei Reibkupplungen 32, 34 außenumfänglich umgibt.

Das Verbindungsglied 48 ist auf der zweiten axialen Seite 35 der Kupplungseinrichtung 31 mit einer Nebenwelle 50 verbunden. Die Nebenwelle 50 ist, wie auch die Eingangswelle 26, drehbar in Bezug auf das Gehäuse 24 gelagert. Die Nebenwelle 50 ist als Hohlwelle ausgebildet, die um die zweite Ausgangswelle 30 herum angeordnet ist.

An einem Innenumfangsabschnitt des Verbindungsgliedes 48 ist ein Außenlamellenträger 52 der ersten Reibkupplung 32 ausgebildet. An einem weiteren, axial versetzten, Innenumfangsabschnitt des Verbindungsgliedes 48 ist ein Außenlamellenträger 54 der zweiten Reibkupplung 34 ausgebildet.

In axialer Richtung zwischen den zwei Reibkupplungen 32, 34 ist eine Abstützungseinrichtung 56 vorgesehen. Die Axialabstützungseinrichtung 56 beinhaltet einen ersten Stützring 58, der auf der der zweiten Reibkupplung 34 zugewandten axialen Seite der ersten Reibkupplung 32 angeordnet ist, und einen zweiten Stützring 60, der auf der der ersten Reibkupplung 32 zugewandten axialen Seite der zweiten Reibkupplung 34 angeordnet ist. Der erste Stützring 58 dient zum Abstützen von axialen Betätigungskräften auf die erste Reibkupplung 32. Der zweite Stützring 60 dient zum Abstützen von axialen Betätigungskräften auf die zweite Reibkupplung 34. Die zwei Stützringe 58, 60 sind axial an dem Verbindungsglied 48 festgelegt, und zwar so, dass sie in axialer Richtung voneinander beabstandet sind, und zwar um einen Abstand von wenigstens 5 mm, insbesondere 10 mm.

Durch die separaten Stützringe 58, 60 kann ein Übersprechen bei einem Betätigen der Reibkupplungen 32, 34 verhindert oder zumindest verringert werden.

Die Doppelkupplungsanordnung 14 weist ferner einen ersten Hydraulikzylinder 64 und einen zweiten Hydraulikzylinder 66 auf. Die Hydraulikzylinder 64, 66 sind auf axial gegenüberliegenden Seiten der Kupplungseinrichtung 31 angeordnet. Der erste Hydraulikzylinder 64 ist an der Eingangswelle 26 festgelegt. Der zweite Hydraulikzylinder 66 ist an der Nebenwelle 50 festgelegt. Der erste Hydraulikzylinder 64 weist einen ersten Kolben 68 auf, der dazu ausgelegt ist, das Lamellenpaket der ersten Reibkupplung 32 gegen den ersten Stützring 58 zusammenzudrücken. Der zweite Hydraulikzylinder 66 weist einen zweiten Kolben 70 auf, der dazu ausgelegt ist, das Lamellenpaket der zweiten Reibkupplung 34 gegen den zweiten Stützring 60 axial anzudrücken. Die Betätigungsrichtungen der zwei Hydraulikzylinder 64, 66 sind aufeinander zu gerichtet.

Der erste Hydraulikzylinder 64 weist einen ersten Zylinderraum 72 auf, der zwischen dem Eingangskorb 46 und dem ersten Kolben 68 eingerichtet ist. Der zweite Hydraulikzylinder 66 weist einen zweiten Zylinderraum 74 auf, der zwischen einem sich radial erstreckenden Abschnitt des Verbindungsgliedes 48 und dem zweiten Kolben 70 eingerichtet ist.

Die Kolben 68, 70 weisen eine Radialerstreckung E1 auf. Die Reibkupplungen 32, 34 weisen eine Radialerstreckung E2 auf. Die Radialerstreckung E1 und die Radialerstreckung E2 überschneiden sich zu wenigstens 30 %. Auch die Zylinderräume 72, 74 überschneiden sich in radialer Richtung mit der Radialerstreckung E2 der Reibkupplungen 32, 34. Die zwei Hydraulikzylinder 64, 66 sind in radialer Richtung auf annähernd der gleichen Höhe angeordnet wie die Reibkupplungen 32, 34.

Ein Radius des Außendurchmessers der ersten Eingangswelle 26 ist bei R1 gezeigt. Ein Radius des Außendurchmessers der Nebenwelle 50 ist bei R2 gezeigt. Das Verhältnis von R1 zu R2 liegt in einem Bereich von 0,8 bis 1,2, insbesondere in einem Bereich von 0,9 bis 1,1. Vorzugsweise sind R1 und R2 identisch.

Im letzteren Fall können nicht nur Lamellen der Reibkupplungen 32, 34 und die Stützglieder 58, 60 als Gleichteile ausgebildet werden. Auch Elemente der Hydraulikzylinder 64, 66 können hierbei als Gleichteile ausgebildet werden, insbesondere die Kolben 68, 70, sowie weitere Bauteile dieser Hydraulikzylinder 64, 66.

Die Kolben 68, 70 sind durch nicht näher bezeichnete Federn jeweils in axialer Richtung so vorgespannt, dass die Reibkupplungen 32, 34 normalerweise geöffnet sind ("normally open"). Die Federn stützen sich dabei an jeweiligen Abstützungsgliedern ab, die in Fig. 1 nicht näher bezeichnet sind, jedoch axial in Bezug auf die Eingangswelle 26 bzw. die Nebenwelle 50 gesichert sind. Auch diese Abstützungsglieder und die Federn können als Gleichteile ausgebildet sein.

Die Doppelkupplungsanordnung 14 weist ferner eine Fluidzuführeinrichtung 80 auf. Die Fluidzuführeinrichtung 80 weist eine hydraulische Stelleinheit 82 auf, die beispielsweise an einem Außenumfang des Gehäuses 24 festgelegt sein kann. Die hydraulische Stelleinheit 82 weist beispielsweise einen Pumpenaktuator mit einer elektromotorisch angetriebenen Pumpe für die erste Reibkupplung 32 und einen entsprechenden Pumpenaktuator für die zweite Reibkupplung 34 auf. Bei derartigen Pumpenaktuatoren kann der bereitgestellte Druck zum Betätigen der Reibkupplungen durch Einstellen der Drehzahl des jeweiligen Elektromotors geregelt werden. Alternativ kann anstelle des Pumpenaktuators auch ein konventionelles Druckregelventil verwendet werden, das über eine Hydraulikpumpe mit Hydraulikdruck versorgt wird. Die Fluidzuführeinrichtung 80 weist einen ersten Betätigungsfluidkanal 84 auf, der sich durch das Gehäuse 24 hin zu der ersten axialen Seite 33 der Kupplungseinrichtung 31 erstreckt und in einer ersten Drehdurchführung 86 mündet, die das Gehäuse 24 als Festteil mit der Eingangswelle 26 als Drehteil verbindet. In der Eingangswelle 26 ist ein erster Verbindungskanal 88 ausgebildet, der den ersten Betätigungsfluidkanal 84 über die erste Drehdurchführung 86 mit dem ersten Zylinderraum 72 verbindet.

Auf der axial gegenüberliegenden Seite der Kupplungseinrichtung 31 beinhaltet die Fluidzuführeinrichtung 80 einen zweiten Betätigungsfluidkanal 90, der in einer zweiten Drehdurchführung 92 mündet, die das Gehäuse 24 als Festteil und die Nebenwelle 50 als Drehteil miteinander verbindet. In der Nebenwelle 50 ist ein zweiter Verbindungskanal 94 vorgesehen, der den zweiten Betätigungsfluidkanal 90 über die zweite Drehdurchführung 92 mit dem zweiten Zylinderraum 74 verbindet.

Die Fluidzuführeinrichtung 80 kann ferner eine Kühlfluidzufuhr beinhalten. Dies ist in Fig. 1 für die erste Reibkupplung 32 schematisch bei 96 angedeutet, und zwar als erster Kühlkanal 96, der in der Eingangswelle 26 ausgebildet ist. Der erste Kühlkanal 96 liefert Kühlfluid zur radialen Innenseite der ersten Reibkupplung 32 und ist vorzugsweise ebenfalls über die erste Drehdurchführung 86 mit einem gehäusefesten Abschnitt der Fluidzuführeinrichtung 80 verbunden.

In entsprechender Weise ist in der Nebenwelle 50 ein zweiter Kühlkanal 98 ausgebildet, der dazu vorgesehen ist, Kühlfluid zu einer radialen Innenseite der zweiten Reibkupplung 34 hin zu führen. In Fig. 1 ist der zweite Kühlkanal 98 lediglich schematisch angedeutet. Dieser kann beispielsweise in Umfangsrichtung versetzt gegenüber dem zweiten Verbindungskanal 94 angeordnet sein. Der zweite Kühlkanal 98 ist vorzugsweise über die zweite Drehdurchführung 92 mit einem gehäusefesten Teil der Fluidzuführeinrichtung 80 verbunden.

Das Gehäuse 24 weist wenigstens ein erstes Gehäuseteil 102 und ein zweites Gehäuseteil 104 auf, die über eine radiale Trennfuge 106 miteinander verbunden sind. Der erste Betätigungsfluidkanal 84 kann sich dabei beispielsweise von dem zweiten Gehäuseteil 104 (an dem vorzugsweise die hydraulische Stelleinheit 82 festgelegt ist) durch die Trennfuge 106 hindurch zu dem ersten Gehäuseteil 102 erstrecken. Das erste Gehäuseteil 102 ist hierbei vorzugsweise der radial außenliegende Festteil der ersten Drehdurchführung 86. Der zweite Betätigungsfluidkanal 90 kann sich durch das zweite Gehäuseteil 104 hindurch erstrecken, und zwar bis hin zu der zweiten Drehdurchführung 92, wobei der zweite Gehäuseteil 104 der radial außenliegende Festteil der zweiten Drehdurchführung 92 ist.

Der Radius des Außendurchmessers des Verbindungsgliedes 48 ist in Fig. 1 bei R3 gezeigt. Der Radius R3 kann bei der vorliegenden Doppelkupplungsanordnung 14 sehr klein sein, beispielsweise in einem Bereich von dem 1,5- bis 3-fachen der Radialerstreckung E2 der Reibkupplungen 32, 34 liegen, vorzugsweise in einem Bereich des 2-fachen bis 2,5-fachen der Radialerstreckung E2.

## Patentansprüche

1. Doppelkupplungsanordnung (14) für einen Kraftfahrzeugantriebsstrang (10), mit
- einem Gehäuse (24),
- einer ersten und einer zweiten Reibkupplung (32, 34), die in dem Gehäuse (24) in einer axialen Richtung versetzt angeordnet sind und eine Kupplungseinrichtung (31) mit einer ersten axialen Seite (33) und einer zweiten axialen Seite (35) bilden, und
- einem ersten Aktuator (64) zur Betätigung der ersten Reibkupplung (32) und einem zweiten Aktuator (66) zur Betätigung der zweiten Reibkupplung (34), und
- einer Axialabstützungseinrichtung (56), die in axialer Richtung zwischen der ersten und der zweiten Reibkupplung (32, 34) angeordnet ist. wobei die Axialabstützungseinrichtung (56) ein erstes Abstützungsglied (58) für die erste Reibkupplung (321 und eine zweites Abstützungsglied (60) für die zweite Reibkupplung (34) aufweist, wobei die Doppelkupplungsanordnung im Wesentlichen symmetrisch in Bezug auf eine Radialebene ausgebildet ist,
**dadurch gekennzeichnet, dass** die Abstützungsglieder (58,60) separat und in axialer Richtung voneinander beabstandet sind und dass das erste und das zweite Abstützungsglied (58, 60) jeweils als Stützring ausgebildet sind, wobei die Stützringe (58, 60) an einem gemeinsamen Außenlamellenträger-Verbindungsglied (48) axial festgelegt sind.

2. Doppelkupplungsanordnung nach Anspruch 1 , **dadurch gekennzeichnet, dass** der erste und der zweite Aktuator (64, 66) jeweils als Hydraulikzylinder ausgebildet sind, wobei eine Fluidzufuhr zu den Hydraulikzylindern (64, 66) so ausgebildet ist, dass Fluid zu dem ersten Hydraulikzylinder (64) auf der ersten axialen Seite (33) der Kupplungseinrichtung (31) zugeführt wird und Fluid zu dem zweiten Hydraulikzylinder (66) auf der entgegengesetzten zweiten axialen Seite (35) der Kupplungseinrichtung (31) zugeführt wird.

3. Doppelkupplungsanordnung nach Anspruch 2, **dadurch gekennzeichnet, dass** der erste Hydraulikzylinder (64) über eine erste Drehdurchführung (86) mit Fluid versorgt wird, wobei der zweite Hydraulikzylinder (66) über eine zweite Drehdurchführung (92) mit Fluid versorgt wird, und wobei die erste und die zweite Drehdurchführung (86, 92) auf axial gegenüberliegenden Seiten der Kupplungseinrichtung (31) angeordnet sind.

4. Doppelkupplungsanordnung nach Anspruch 3, **dadurch gekennzeichnet, dass** die erste Drehdurchführung (86) und/oder die zweite Drehdurchführung (92) ein in Bezug auf das Gehäuse (24) feststehendes Festglied (104, 102) und ein in Bezug auf das Gehäuse (24) drehbar gelagertes Drehglied (26, 50) aufweist, wobei das Drehglied (26, 50) radial innerhalb des Festgliedes (104, 102) angeordnet ist.

5. Doppelkupplungsanordnung nach einem der Ansprüche 1 - 4, **dadurch gekennzeichnet, dass** die erste und die zweite Reibkupplung (32, 34) jeweils als nasslaufende Lamellenkupplungen ausgebildet sind, wobei Kühlfluid für die erste und die zweite Reibkupplung (32, 34) auf axial gegenüberliegenden Seiten der Kupplungseinrichtung (31) zugeführt wird.

6. Doppelkupplungsanordnung nach einem der Ansprüche 1 - 5 , **dadurch gekennzeichnet, dass** die erste und die zweite Reibkupplung (32, 34) jeweils als nasslaufende Lamellenkupplung mit einem jeweiligen Außenlamellenträger (52, 54) und einem jeweiligen Innenlamellenträger (42, 44) ausgebildet sind, wobei die erste und die zweite Reibkupplung (32, 34) ein gemeinsames Verbindungsglied (48) aufweisen und wobei das Verbindungsglied (48) mit den Außenlamellenträgern (52, 54) der ersten und der zweiten Reibkupplung (32, 34) verbunden ist.

7. Doppelkupplungsanordnung nach einem der Ansprüche 1 - 6, **dadurch gekennzeichnet, dass** die erste und die zweite Reibkupplung (32, 34) jeweils als nasslaufende Lamellenkupplungen mit einem jeweiligen Außenlamellenträger (52, 54) und einem jeweiligen Innenlamellenträger (42, 44) ausgebildet sind, wobei die Innenlamellenträger (42, 44) jeweils mit einem Ausgangsglied (38, 40) der ersten bzw. zweiten Reibkupplung (32, 34) verbunden sind.

8. Doppelkupplungsanordnung nach einem der Ansprüche 1 - 7, **dadurch gekennzeichnet, dass** der erste und der zweite Aktuator (64, 66) jeweils als Hydraulikzylinder ausgebildet sind, die jeweils einen Betätigungskolben (68, 70) zur Betätigung der ersten bzw. der zweiten Reibkupplung (32, 34) aufweisen, wobei der erste und/oder der zweite Betätigungskolben (68, 70) eine radiale Kolbenerstreckung (E1) aufweist, wobei die erste und/oder die zweite Reibkupplung (32, 34) eine radiale Kupplungserstreckung (E2) aufweist, und wobei sich die radiale Kolbenerstreckung (E1) und die radiale Kupplungserstreckung (E2) zu wenigstens 30 % überschneiden.

9. Doppelkupplungsanordnung nach einem der Ansprüche 1 - 8, **dadurch gekennzeichnet, dass** das Gehäuse (24) ein erstes Gehäuseteil (102) und ein zweites Gehäuseteil (104) aufweist, die über eine radiale Trennfuge (106) miteinander verbunden sind, wobei Fluid für die erste Reibkupplung (32) über das erste Gehäuseteil (102) zugeführt wird und wobei Fluid für die zweite Reibkupplung (34) über das zweite Gehäuseteil (104) zugeführt wird.

## Claims

1. Double clutch system (14) for a motor vehicle drivetrain (10), having
- a casing (24),
- a first and a second friction clutch (32, 34) which are arranged in the casing (24) so as to be offset in an axial direction and which form a clutch device (31) with a first axial side (33) and a second axial side (35), and
- a first actuator (64) for actuating the first friction clutch (32) and a second actuator (66) for actuating the second friction clutch (34), and
- an axial support device (56) which is arranged in an axial direction between the first and the second friction clutch (32, 34), wherein the axial support device (56) has a first support element (58) for the first friction clutch (32) and a second support element (60) for the second friction clutch (34), wherein the double clutch system is of substantially symmetrical form with respect to a radial plane,
**characterized in that** the support elements (58, 60) are separate and spaced apart from one another in an axial direction, and **in that** the first and the second support element (58, 60) are each formed as a support ring, wherein the support rings (58, 60) are axially fixed to a common outer plate carrier connecting element (48).

2. Double clutch system according to Claim 1, **characterized in that** the first and the second actuator (64, 66) are each formed as hydraulic cylinders, wherein a fluid supply to the hydraulic cylinders (64, 66) is configured such that fluid is supplied to the first hydraulic cylinder (64) on the first axial side (33) of the clutch device (31) and fluid is supplied to the second hydraulic cylinder (66) on the opposite, second axial side (35) of the clutch device (31).

3. Double clutch system according to Claim 2, **characterized in that** the first hydraulic cylinder (64) is supplied with fluid via a first rotary leadthrough (86), wherein the second hydraulic cylinder (66) is supplied with fluid via a second rotary leadthrough (92), and wherein the first and the second rotary leadthrough (86, 92) are arranged on axially opposite sides of the clutch device (31).

4. Double clutch system according to Claim 3, **characterized in that** the first rotary leadthrough (86) and/or the second rotary leadthrough (92) has a fixed element (104, 102), which is fixed in relation to the casing (24), and a rotary element (26, 50), which is mounted so as to be rotatable in relation to the casing (24), wherein the rotary element (26, 50) is arranged radially within the fixed element (104, 102).

5. Double clutch system according to any of Claims 1 - 4, **characterized in that** the first and the second friction clutch (32, 34) are each formed as wet-running multiplate clutches, wherein cooling fluid for the first and the second friction clutch (32, 34) is supplied on axially opposite sides of the clutch device (31).

6. Double clutch system according to any of Claims 1 - 5, **characterized in that** the first and the second friction clutch (32, 34) are each formed as a wet-running multiplate clutch with a respective outer plate carrier (52, 54) and a respective inner plate carrier (42, 44), wherein the first and the second friction clutch (32, 34) have a common connecting element (48), and wherein the connecting element (48) is connected to the outer plate carriers (52, 54) of the first and of the second friction clutch (32, 34).

7. Double clutch system according to any of Claims 1 - 6, **characterized in that** the first and the second friction clutch (32, 34) are each formed as wet-running multiplate clutches with a respective outer plate carrier (52, 54) and a respective inner plate carrier (42, 44), wherein the inner plate carriers (42, 44) are connected in each case to an output element (38, 40) of the first and second friction clutch (32, 34) respectively.

8. Double clutch system according to any of Claims 1 - 7, **characterized in that** the first and the second actuator (64, 66) are each formed as hydraulic cylinders which each have an actuating piston (68, 70) for actuating the first and the second friction clutch (32, 34) respectively, wherein the first and/or the second actuating piston (68, 70) has a radial piston extent (E1), wherein the first and/or the second friction clutch (32, 34) has a radial clutch extent (E2), and wherein the radial piston extent (E1) and the radial clutch extent (E2) overlap by at least 30%.

9. Double clutch system according to any of Claims 1 - 8, **characterized in that** the casing (24) has a first casing part (102) and a second casing part (104) which are connected to one another by means of a radial joint (106), wherein fluid for the first friction clutch (32) is supplied via the first casing part (102) and wherein fluid for the second friction clutch (34) is supplied via the second casing part (104).

## Revendications

1. Système d'embrayage double (14) pour une chaîne cinématique (10) de véhicule automobile, le système comprenant
- un carter (24),
- un premier et un deuxième embrayage à friction (32, 34) qui sont disposés dans le carter (24) de manière décalée dans une direction axiale et forment un dispositif d'embrayage (31) présentant un premier côté axial (33) et un deuxième côté axial (35), et
- un premier actionneur (64) servant à l'actionnement du premier embrayage à friction (32) et un deuxième actionneur (66) servant à l'actionnement du deuxième embrayage à friction (34), et
- un dispositif de support axial (56) qui est disposé entre le premier et le deuxième embrayage à friction (32, 34) dans la direction axiale, le dispositif de support axial (56) comprenant un premier organe de support (58) pour le premier embrayage à friction (32) et un deuxième organe de support (60) pour le deuxième embrayage à friction (34), le système d'embrayage double étant réalisé de manière sensiblement symétrique par rapport à un plan radial,
**caractérisé en ce que** les organes de support (58, 60) sont séparés et espacés l'un de l'autre dans la direction axiale, et **en ce que** le premier et le deuxième organe de support (58, 60) sont réalisés respectivement en tant que bagues de support, les bagues de support (58, 60) étant fixées axialement à un organe de liaison (48) de support de disques extérieurs.

2. Système d'embrayage double selon la revendication 1, **caractérisé en ce que** le premier et le deuxième actionneur (64, 66) sont réalisés respectivement en tant que cylindres hydrauliques, une alimentation en fluide vers les cylindres hydrauliques (64, 66) étant réalisée de telle sorte que le fluide vers le premier cylindre hydraulique (64) est acheminé sur le premier côté axial (33) du dispositif d'embrayage (31) et le fluide vers le deuxième cylindre hydraulique (66) est acheminé sur le deuxième côté axial opposé (35) du dispositif d'embrayage (31).

3. Système d'embrayage double selon la revendication 2, **caractérisé en ce que** le premier cylindre hydraulique (64) est alimenté en fluide par le biais d'un premier passage tournant (86), le deuxième cylindre hydraulique (66) étant alimenté en fluide par le biais d'un deuxième passage tournant (92), et le premier et le deuxième passage tournant (86, 92) étant disposés sur des côtés axialement opposés du dispositif d'embrayage (31).

4. Système d'embrayage double selon la revendication 3, **caractérisé en ce que** le premier passage tournant (86) et/ou le deuxième passage tournant (92) comprennent un organe fixe (104, 102) immobile par rapport au carter (24) et un organe rotatif (26, 50) monté de manière rotative par rapport au carter (24), l'organe rotatif (26, 50) étant disposé radialement à l'intérieur de l'organe fixe (104, 102).

5. Système d'embrayage double selon l'une des revendications 1 à 4, **caractérisé en ce que** le premier et le deuxième embrayage à friction (32, 34) sont réalisés respectivement en tant qu'embrayages à disques humides, le fluide de refroidissement pour le premier et le deuxième embrayage à friction (32, 34) étant acheminé sur des côtés axialement opposés du dispositif d'embrayage (31).

6. Système d'embrayage double selon l'une des revendications 1 à 5 , **caractérisé en ce que** le premier et le deuxième embrayage à friction (32, 34) sont réalisés respectivement en tant qu'embrayages à disques humides comprenant un support de disques extérieurs (52, 54) respectif et un support de disques intérieurs (42, 44) respectif, le premier et le deuxième embrayage à friction (32, 34) comprenant un organe de liaison (48) commun et l'organe de liaison (48) étant relié aux supports de disques extérieurs (52, 54) du premier et du deuxième embrayage à friction (32, 34).

7. Système d'embrayage double selon l'une des revendications 1 à 6, **caractérisé en ce que** le premier et le deuxième embrayage à friction (32, 34) sont réalisés respectivement en tant qu'embrayages à disques humides comprenant un support de disques extérieurs (52, 54) respectif et un support de disques intérieurs (42, 44) respectif, le support de disques intérieurs (42, 44) étant relié respectivement à un organe de sortie (38, 40) du premier ou du deuxième embrayage à friction (32, 34).

8. Système d'embrayage double selon l'une des revendications 1 à 7, **caractérisé en ce que** le premier et le deuxième actionneur (64, 66) sont réalisés respectivement en tant que cylindres hydrauliques qui comprennent respectivement un piston d'actionnement (68, 70) servant à l'actionnement du premier ou du deuxième embrayage à friction (32, 34), le premier et/ou le deuxième piston d'actionnement (68, 70) présentant une étendue radiale de piston (E1), le premier et/ou le deuxième embrayage à friction (32, 34) présentant une étendue radiale d'embrayage (E2), et l'étendue radiale de piston (E1) et l'étendue radiale d'embrayage (E2) se chevauchant sur au moins 30 %.

9. Système d'embrayage double selon l'une des revendications 1 à 8, **caractérisé en ce que** le carter (24) comprend une première partie de carter (102) et une deuxième partie de carter (104) qui sont reliées l'une à l'autre par le biais d'un joint de séparation radial (106), le fluide pour le premier embrayage à friction (32) étant acheminé par le biais de la première partie de carter (102) et le fluide pour le deuxième embrayage à friction (34) étant acheminé par le biais de la deuxième partie de carter (104).
